# EUROPEAN PATENT SPECIFICATION

(11) **EP 0 534 725 B1**
(45) Date of publication and mention of the grant of the patent: **17.12.1997**
(21) Application number: 92308646.6
(22) Date of filing: 23.09.1992
(51) Int. Cl.: H04N 1/00

(54) **Multifunctional printer**
Multifunktioneller Drucker
Imprimante multifonctionelle

(30) Priority: 26.09.1991 JP 247434/91
(43) Date of publication of application: 31.03.1993
(73) Proprietor: Oki Electric Industry Co., Ltd., Tokyo (JP)
(72) Inventor: Isobe, Minoru, c/o Oki Electric Industry Co., Ltd., Tokyo (JP)
(74) Representative: Read, Matthew Charles

(56) References cited:
- DE-A- 4 018 123
- GB-A- 2 217 261

## Description

The present invention relates to a multifunctional printer for performing both printing and reading functions.

A conventional printer is disclosed in Japanese Patent Laid-Open Publication JP-A-1-105970. However the printer can perform neither double-sided reading nor double-sided printing. Japanese Utility Model Laid-Open Publication JP-U-1-172055 discloses a printer capable of performing double-sided printing. However this printer has disadvantages in that it has no means to read data on printed matter, and is large in size because in order to perform double sided printing, the document needs to be reversed outside of the main body of the printer.

Another multifunctional printer is disclosed in DE-A-4018123 which comprises a sheet transporting path arranged to form a loop; a printing element located within the loop for printing data on a sheet in said path; and a reading station for reading data from a sheet.

The present invention is characterised in that the reading station is disposed along said path and arranged to perform double sided reading of said sheet, and said path is arranged such that a sheet may make a complete pass around the loop without being reversed.

This allows a much more compact construction of multifunctional printer to be provided.

In order that the invention may be more fully understood, embodiments thereof will now be described in way of example with reference to the accompanying drawings wherein:
Fig. 1 is a schematic side elevational view of a first embodiment of a multifunctional printer according to the present invention;
Fig. 2 is a block diagram of a control mechanism for the multifunctional printer shown in Fig. 1;
Fig. 3 is a diagram for explaining single-sided reading in the multifunctional printer shown in Fig.1;
Fig. 4 is a diagram for explaining the performance of a double-sided reading in the printer of Fig. 1;
Fig. 5 is a schematic illustration of showing its different operating positions, for use in the multifunctional printer of Fig. 1;
Fig. 6 is a diagram for explaining the performance of single-sided printing with the printer shown in Fig. 1;
Fig. 7 is a diagram for explaining the performance of double-sided printing with the printer of Fig. 1;
Fig. 8 is a schematic side elevational view of a second embodiment of multifunctional printer according to the present invention;
Fig. 9 is a schematic side elevational view of a third embodiment of multifunctional printer according to the present invention;
Fig. 10 is a plan view of a light emitting and receiving head used in the printer shown in Fig. 9; and
Fig. 11 is a view of a fourth embodiment of multifunctional printer according to the present invention.

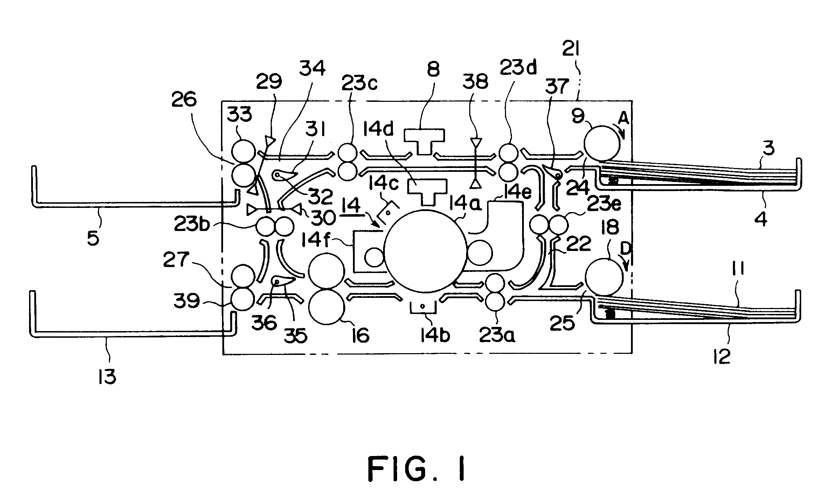

### First Embodiment (Figs. 1 to 7):

A multifunctional printer according to the first embodiment of the present invention will be described with reference to Figs. 1 to 7.

In Fig. 1, the multifunctional printer includes a main unit 21, a hopper 4 for documents to be read such as printed or typed sheets, a hopper 12 for sheet print media 11 such as copying paper, a stacker 5 for documents 3 after they have been read, and a stacker 13 for the sheets 11 after they have been printed. The hoppers 4 and 12 are respectively disposed at one end of the main unit 21 and the stackers 5 and 13 are correspondingly disposed at the opposite end thereof.

The main unit 21 further includes an electrophotographic recording portion 14 for performing printing operations on the sheets 11. The electrophotographic recording portion 14 comprises a photoconductor drum 14a, an electrostatic charging unit 14c, a writing head 14d, a developing unit 14e, a transfer unit 14b and a cleaning unit 14f. A passage 22 is disposed within the unit 21, in a loop around the electrophotographic recording portion 14 to convey sheets from the hoppers to the stackers as will be explained in more detail later. A fixing unit 16 and a plurality of rotary conveying rollers 23a, 23b, 23c, 23d and 23e are disposed at locations along the passage 22, to convey sheets along the passage. The passage 22 passes between the photoconductor drum 14a and the transfer unit 14b, and also extends through a sheet reading station that includes a document reading head 8. The reading head 8 includes light-receiving elements such as light emitting diodes and light-receiving transistors which are disposed in an array structure. The reading head 8 can read data printed on the documents 3, by detecting light reflected from the documents as they pass under the reading head 8.

The passage 22 is connected to a feed port 24 through which the documents to be read are fed from hopper 4, and the passage 22 is also connected to a feed port 25 through which sheets 11 to be printed are fed from hopper 12. Rollers 9 and 18 feed individual sheets into the ports from the hoppers 3 and 11. Furthermore, the passage 22 also is connected to a discharge port 26 from which the read documents 3 are discharged into stacker 5 and a discharge port 27 from which printed sheets 11 are discharged into hopper 13. Sensors 29 and 30 and a switching blade 31 are arranged in the passage 22 where it is connected to the discharge port 26. The detecting sensors 29 and 30 comprise respectively a light-emitting diode and a light-receiving transistor, and detect the presence of a sheet in the passageway. The switching blade 31 is rotatable about an axis 32 to switch the travelling direction of a sheet. A reversing portion 34 comprises the detecting sensors 29 and 30, the switching blade 31 and discharge rollers 33, and can be used to reverse the surface of a document or a print medium 11.

A switching blade 35 is rotatably mounted about an axis 36 in the passage 22 adjacent the discharge port 27 and can switch the travelling direction of the printed sheets 11. Furthermore, a similar switching blade 37 is mounted in the region of the passageway 22 where it is connected to the feed port 24, and can switch the travelling direction of sheets in the passageway. A sensor 38 comprises a light-emitting diode and a light-receiving transistor, and is arranged between the reading head 8 and the conveying rollers 23d to detect the presence of a sheet which travels along the passage 22.

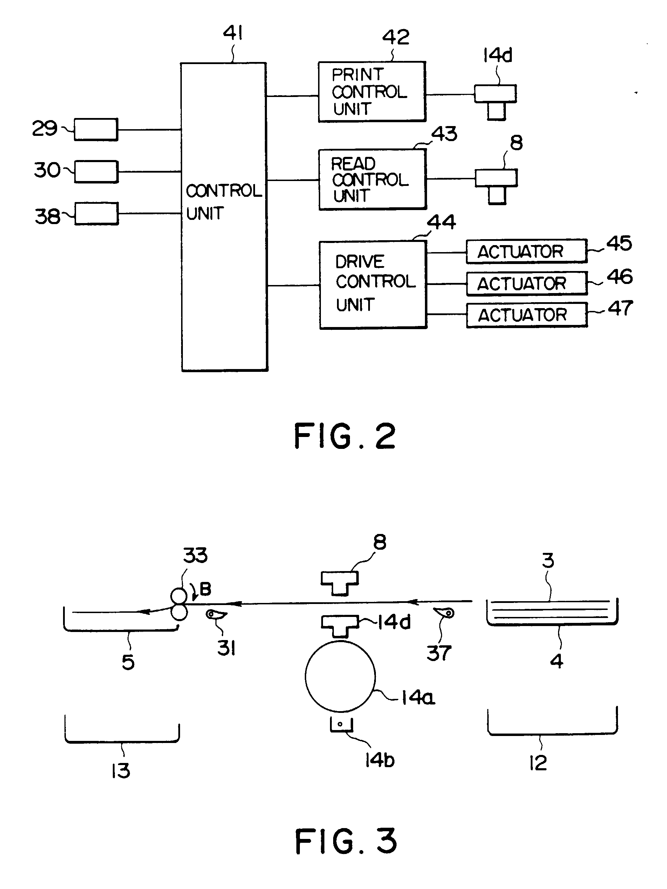

Fig. 2 is a block diagram of the control mechanism for the multifunctional printer. In Fig. 2, a main control device 41 comprises, for example, a microcomputer for controlling the operation of the main unit 21 and is connected to a print control unit 42, a read control unit 43, and a drive control unit 44. The print control unit 42 processes the print data supplied from main control device 41 and sends the processed data to the writing head 14d. The reading control unit 43 is connected to the reading head 8 and processes the data read by the reading head 8. The drive control unit 44 drives various motors, not shown, in the main unit 21 for thereby driving the electrophotographic recording portion 14 and the conveying rollers 23a to 23c, etc. The drive control unit 44 also is connected to actuators 45, 46 and 47 and drives them. The actuator 45 is connected, as illustrated in Fig. 1, to the switching blade 31. When the actuator 45 is driven, the switching blade 31 turns. Likewise, the actuator 46 is connected to the switching blade 35, and actuator 47 is connected to the switching blade 37.

The main control device 41 is connected to the sensors 29, 30 and 38 and receives detecting signals issued by these sensors.

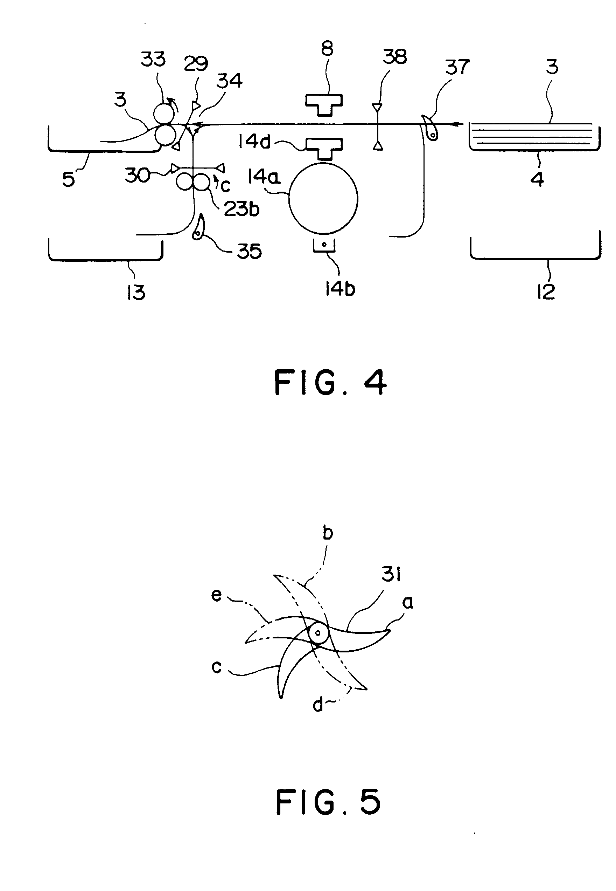

Operation of the first embodiment will now be described. Firstly, a reading operation will be described with reference to Figs. 3 and 4. Fig. 3 is a view for explaining single-sided sheet reading and Fig. 4 is a view for explaining double-sided sheet reading.

Single-sided reading will now be described with reference to Fig. 3. When a motor, not shown, is rotated upon reception of a drive signal issued by the drive control unit 44, the roller 9 is rotated in the direction of the arrow A, as illustrated in Fig. 1 so that a sheet 3 to be read, is fed from the hopper 4 into the passage 22. Data to be read is on the upper surface of the sheet 3 in Fig. 3. At this time, the switching blade 37 is in the state as illustrated in Fig.3. The read medium 3 passes over the switching blade 37 and enters the passage 22 and thereafter passes under the reading head 8. At this time, light from a light source, not shown, is radiated on the sheet 3 and the reading head 8 receives the light reflected from the sheet, so as to read the data thereon. After the data reading operation, the sheet 3 is fed toward the discharge rollers 33. At this time, the switching blade 31 is in the state (a) in Fig. 5. The sheet 3 is discharged into the stacker 5 by passing over the blade 31, the sheet being driven by the rollers 33, which are rotated in the direction of the arrow B in Fig. 3. The read data is sent to the main control device 41 to be processed therein.

The performance of double-sided reading will be described hereinafter with reference to Fig. 4. This is the same as that of the single-sided reading for the data on the upper side of the sheet 3 when the upper side has been read, the sheet is driven by the rollers 33 until its trailing edge is detected by the sensor 29. Then the main control device 41 illustrated in Fig. 2 stops rotating the discharge rollers 33, with the sheet 3 being gripped between them. The main control device 41 then drives the actuator 45 by way of the drive control unit 44 so as to turn the switching blade 31 to the position (b) illustrated in Fig. 5. The main control device 41 then rotates the discharge rollers 33 in the reverse direction, namely in the direction of the arrow shown in Fig. 4, by way of the drive control unit 44, so as to feed the sheet 3 backward and downward towards the conveying rollers 23b. At this time, the conveying rollers 23b are rotated in the direction of the arrow C. When the sensor 30 confirms the passing of the trailing edge of the sheet 3, the main control device 41 stops rotating the conveying rollers 23b, thereby stopping the conveyance of the sheet 3. Then, the switching blade 31 is positioned at (c) in Fig. 5. Thereafter, the main control device 41 reversely rotates the conveying rollers 23b whereby the sheet 3 is reversed back along the passage 22. As shown in Fig. 4, the sheet 3 is conveyed in a right hand direction to pass under the reading head 8. The switching blade 37 is switched to the position illustrated in Fig. 4. The sheet 3 is guided by the switching blade 37 along passage 22 toward the conveying rollers 23e. The conveying rollers 23e are rotated to feed the sheet 3 downwardly. When the trailing edge of the sheet 3 is detected by the sensor 38, the main control device 41 determines that the sheet 3 has passed the read head 8 and thereafter stops the conveyance of the sheet 3. Then, the main control device 41 operates the conveying rollers so that the sheet is fed back under the reading head 8. At this stage the lower surface of the sheet, when it was accommodated in the hopper 4, is facing uppermost, so that the reading head 8 starts to read the data on this back side (or lower surface) of the sheet 3. Upon completion of the reading operation, the sheet 3 is discharged into the stacker 5 through the discharge rollers 33, in the same way as in the performance of the single-sided reading.

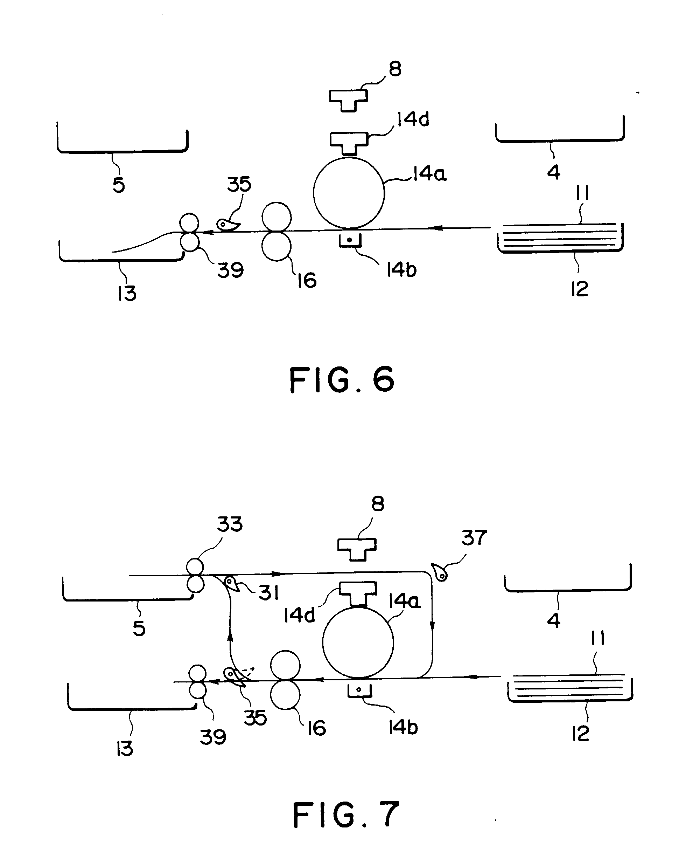

Printing in the multifunctional printer will now be described with reference to Figs. 6 and 7. Fig. 6 is a diagram for explaining the performance of a single-sided printing and Fig. 7 is a diagram for explaining the performance of a double-sided printing.

In the case of single-sided printing, as illustrated in Fig. 1, the roller 18 is rotated in the direction of the arrow D and a sheet of the print medium 11 is fed from the hopper 12 into the passage 22. The conveying rollers 23a are rotated and the print medium 11 is conveyed toward the transfer unit 14b. In the electrophotographic recording portion 14, a toner image is formed on the surface of the photoconductor drum 14a and the toner image is transferred from the photoconductor drum 14a to the face side (or upper surface) of the print medium 11 by the transfer unit 14b during the movement of the print medium 11 between the photoconductor 14a and the transfer unit 14b. The print medium 11 is thereafter conveyed toward the fixing unit 16 where the toner image is fixed on the surface of the print medium 11. In the case of performing single-sided printing, the switching blade 35 is positioned as illustrated in Fig. 6 and the print medium 11 passes under the switching blade 35, thus being discharged to the stacker 13 through the discharge rollers 39.

In the case of performing double-sided printing, the switching blade 35 is positioned as shown in a solid line in Fig. 7. After the toner image is fixed on the face side (or upper surface) of the print medium 11, the print medium 11 is directly upwardly in the passage 22 toward the reversing portion 34.

The switching blade 31 in the reversing portion 34 is positioned at (d) in Fig. 5. The print medium 11, which is conveyed toward the reversing portion 34 by the conveying rollers 23b, is thus conveyed toward the discharge rollers 33. The print medium 11 is moved in the direction of the stacker 5 by the discharge rollers 33, and whilst still applied by them, the trailing edge of the sheet 11 is detected by the sensor 29 and the main control device 41 then stops the conveyance of the sheet and rotates the switching blade 31 to the position (e) in Fig. 5. The direction of travel of the print medium 11 is then reversed and it travels in the passage 22 in the direction of the arrow in Fig. 7 past the reading head 8. The switching blade 37 is positioned as illustrated in Fig. 7 so as to direct the sheet 11 downwardly and then toward the recording portion for a second time, but with its back side (initial lower surface) facing the photoconductor drum 14a. Thus, the print medium 11 passes between the photoconductor drum 14a and the transfer unit 14b. The toner image of data to be printed on the back side of the print medium 11 is formed on the surface of the photoconductor drum 14a to be transferred to the print medium 11, but it is disposed upside down compared with the toner image that transferred onto the upper surface of the print medium 11.

After the toner image has been transferred to the back side (or lower surface) of the print medium 11 by the transfer unit 14b, it is fixed on the print medium 11 by the fixing unit 16. The switching blade 35 is positioned as illustrated by a broken line in Fig. 7, so that the print medium 11 travels toward the discharge rollers 39 and is then discharged to the stacker 13. Data to be printed on the print medium 11 may be the issued by a host unit, not shown, connected to the main unit 21 or data may be read by means of the read head 8.

In the case of performing single-sided printing, when the data read by the read head 8 is printed, it is possible to transmit the data read by the reading head 8 to the electrophotographic recording portion 14 as it is read, whereby the data can be printed concurrently on the print medium 11. In the case of performing double-sided printing, when the data on both sides of the read medium read by the reading head 8 is printed, the data thus read by the reading head 8 is stored in a memory, not shown, in the main control device 41 and the read data is thereafter printed on both sides of the print medium 11.

Inasmuch as both the document to be read 3 and the print medium 11 can travel in the passage 22, it is possible to read continuously the data on one medium and print the data on the same medium. That is, after the data is first read by the reading head 8, printing may be performed by conveying the printing medium toward the printing position through the passage 22, or reading may be performed after the data is printed.

In the case of performing double-sided reading or double-sided printing, the conveying speed of medium is set to a speed corresponding to the performance of the reading head 8 and the electrophotographic recording portion 14 in the regions where the medium passes them. However, it is possible to increase the processing speed of the medium as a whole by increasing the conveying speed of the medium in the carrying passage 22 in portions other than those at which data reading and printing takes place.

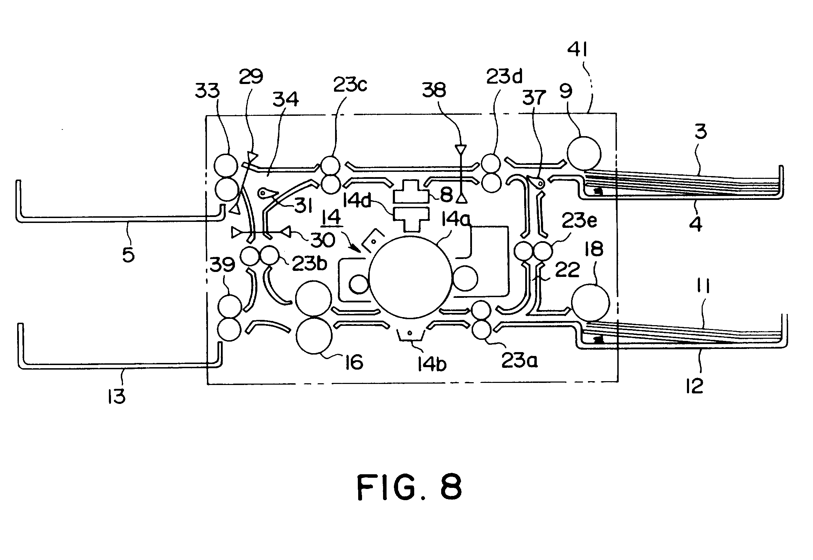

### Second Embodiment (Fig. 8):

A second embodiment of multifunctional printer according to the present invention will be described with reference to Fig. 8. The reading head 8 is disposed within the loop defined by the passage 22 in the main unit 41, and other elements of the multifunctional printer are the same as those of the first embodiment. Accordingly, in the single-sided reading operation, data on the lower surface of each sheet 3 is read as it is fed from the hopper 4. In the double-sided reading operation, the data on the lower surface is first read and then the sheet is turned over in the manner previously described so that data on the initially upper surface is read. It is possible to perform both the single-sided reading and the single-sided printing at the same time, as described previously.

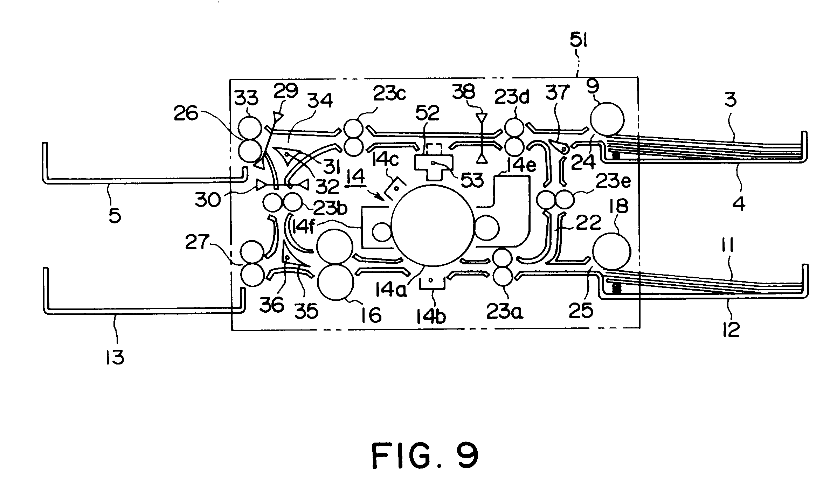

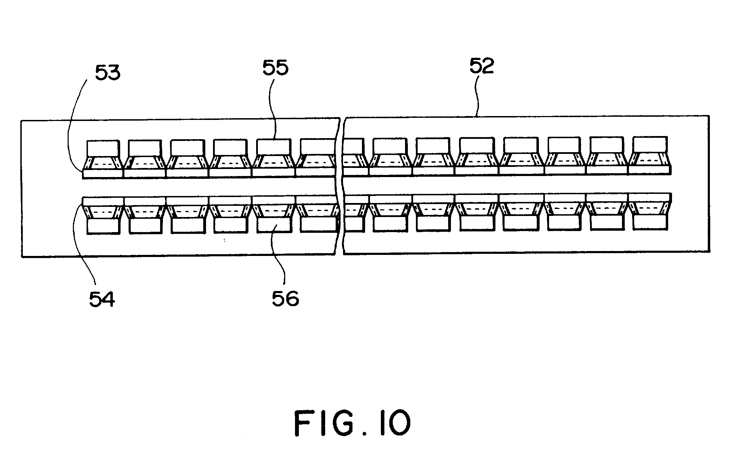

### Third Embodiment (Figs. 9 and 10):

A third embodiment of multifunctional printer according to the present invention will be described with reference to Figs. 9 and 10. Fig. 9 is a view of the third embodiment multifunctional printer according to the present invention. Fig. 10 is a plan view of a light emitting and receiving head 52 shown in Fig. 9.

In Fig. 9, the main unit is referenced 51 and has a light emitting and receiving head 52 comprising a writing head for irradiating the photoconductor drum 14a and a reading head, both heads being incorporated integrally for both data reading and writing, wherein the light emitting and receiving head 52 is turnable about an axis 53, and is disposed between the photoconductor drum 14a and the passage 22.

In Fig. 10, the light emitting and receiving head 52 comprises a light-emitting element array 53, a light-receiving element array 54, drivers 55 for driving a light-emitting element array 53 and read circuits 56 for amplifying the output of the light-receiving element array 54. As illustrated in Fig. 10, the light-emitting element array 53 comprises a plurality of light-emitting elements which form one line. The light-receiving array 54 comprises a plurality of light-receiving elements which form another line. The rest of the configuration of the third embodiment is generally the same as those of the first and second embodiments.

In a read mode, the light emitting and receiving head 52 is turned to the position as illustrated in broken lines in Fig. 9 thereby to read data on the document 3 to be read, which travels in the passage 22. In a print mode, the light emitting and receiving head 52 faces the photoconductor drum 14a, as illustrated in solid lines, so as to irradiate the photoconductor drum 14a.

With the arrangement set forth above, the third embodiment of multifunctional printer according to the invention can read the data and irradiate the photoconductor drum for printing the data so that the multifunctional printer can be of a smaller size as compared with the first and second embodiments.

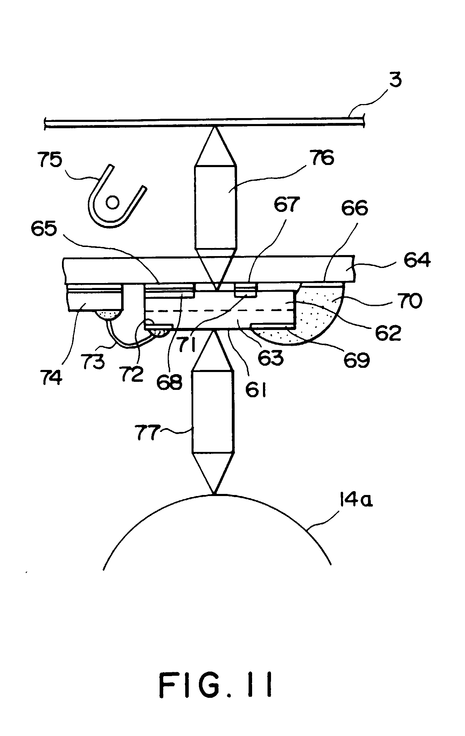

### Fourth embodiment (Fig. 11):

A fourth embodiment of multifunctional printer according to the present invention will be described with reference to Fig. 11 which shows an enlarged view of a light emitting and receiving head.

The multifunctional printer includes a light emitting and receiving head 61 which comprises light emitting elements and receiving elements incorporated integrally, in the same manner as the third embodiment. The rest of the configuration of the fourth embodiment is the same as those of the first to third embodiments.

In Fig. 11, the light emitting and receiving head 61 comprises an arrayed light-receiving element layer 62 (formed of elements such light receiving diodes, a CCD, etc.) and an arrayed light emitting-element layer 63 (formed of elements such as light emitting diodes) which are respectively incorporated into a semiconductor chip and mounted on a glass substrate 64. The glass substrate 64 has ground electrodes 65 and 66 and a signal electrode 67. The ground electrode 65 is connected to the ground electrode 68 of the light-receiving element layer 62 by means of a solder layer. The ground electrode 66 is connected to the ground electrode 69 of the light-emitting element layer 63 by means of solder 70. The signal electrode 67 is connected to a light receiving signal input pad 71 by means of a solder layer. A light-emitting signal output pad 72 of the light-emitting element layer 63 is connected to a light-emitting driver 74 by way of a wire 73.

The light-receiving element layer 62 receives light radiated from a light source 75 which is reflected from the read medium by way of a convergent lens 76 and the glass substrate 64. The light-emitting element layer 63 irradiates the photoconductor drum 14a by way of a convergent lens 77 so as to expose the surface of the photoconductor drum 14a to light, based on the print data.

It is possible to miniaturize and easily manufacture the head with the provision of such a light emitting and receiving head 61. It is possible to perform both the single-sided reading and the single-sided printing at the same time.

Also, it is possible to make the fourth embodiment smaller than the third embodiment and to eliminate the head rotating mechanism.

The present invention is not limited to the first to fourth embodiments set forth above but can be modified variously. For example, although the reading head 8 comprises only light receiving elements in the first and second embodiments, it may be replaced by the light-emitting and receiving head 52 of the third embodiment.

As mentioned above, since the passage 22 is used for both the documents 3 and the print medium 11, it is possible to shorten the entire length of the passage in the multifunctional printer according to invention as compared with the aforementioned prior art devices.

Furthermore, the multifunctional printer can be miniaturized by using a light-emitting element array or light-receiving element array with short optical system as the reading head or the exposing means.

## Claims

1. A multifunctional printer comprising a sheet transporting path (22) arranged to form a loop; a printing element (14) located within the loop for printing data on a sheet in said path (22); and a reading station (8, 52) for reading data from a sheet,
**characterised in that**
the reading station (8, 52) is disposed along said path (22) and arranged to perform double sided reading of said sheet, and said path is arranged such that a sheet may make a complete pass around the loop without being reversed.

2. A printer according to claim 1, wherein the printing element (14) comprises the electroconductive body (14a) of an electrophotographic printing means.

3. A printer according to claim 1 or 2, including a first insertion port (24) for inserting a sheet to be printed into said path (22), a second insertion port (25) for inserting a sheet to be read into said path (22), a first discharge port (26) for discharging a printed sheet from said path (22) and a second discharge port (27) for discharging a read sheet from said path (22).

4. A printer according to claim 1, 2 or 3, wherein said path (22) includes a reversing portion (34) provided with reversing means (23b, 29, 30, 31, 33) for reversing the travel of a sheet in said path (22).

5. A printer according to claim 4, wherein the reversing means (23b, 29, 30, 31, 33) comprises rollers (23b, 33), a switching blade (31) and sheet detecting sensors (29, 30).

6. A printer according to claim 2, wherein the printing element (14) includes a light source (52) for creating an electrostatic latent image on said photoconductive body (14a), the light source (52) being rotatable into a position for illuminating a sheet for reading data thereform at the reading station (52).

7. A printer according to claim 6, wherein said light source (52) comprises an integrally formed array of light emitting (53) and light detecting (55) elements.

## Patentansprüche

1. Multifunktionsdrucker mit einem Bogentransportweg (22), der dafür eingerichtet ist, eine Schleife zu bilden, einem Druckelement (14), das sich innerhalb der Schleife befindet, zum Drucken von Daten auf einen Bogen auf dem Weg (22), und einer Lesestation (8, 52) zum Lesen von Daten von einem Bogen,
**dadurch gekennzeichnet, daß**
die Lesestation (8, 52) längs des Weges (22) angeordnet und dafür eingerichtet ist, doppelseitiges Lesen von dem Bogen durchzuführen, und der Weg so eingerichtet ist, daß ein Bogen einen vollständigen Durchgang rings um die Schleife durchführen kann, ohne umgekehrt zu werden.

2. Drucker gemäß Anspruch 1, bei dem das Druckelement (14) den elektroleitenden Körper (14a) einer elektrofotografischen Druckeinrichtung aufweist.

3. Drucker gemäß Anspruch 1 oder 2, mit einer ersten Einführöffnung (24) zum Einführen eines zu bedruckenden Bogens in den Weg (22), einer zweiten Einführöffnung (25) zum Einführen eines zu lesenden Bogens in den Weg (22), einer ersten Ausgabeöffnung (26) zum Ausgeben eines bedruckten Bogens von dem Weg (22) und einer zweiten Ausgabeöffnung (27) zum Ausgeben eines gelesenen Bogens von dem Weg (22).

4. Drucker gemäß Anspruch 1, 2 oder 3, bei dem der Weg (22) einen Umkehrteil (34) enthält, der mit einer Umkehreinrichtung (23b, 29, 30, 31, 33) versehen ist, zum Umkehren der Bewegung eines Bogens auf dem Weg (22).

5. Drucker gemäß Anspruch 4, bei dem die Umkehreinrichtung (23b, 29, 30, 31, 33) Rollen (23b, 33), eine Umschaltklinge (31) und Bogennachweissensoren (29, 30) aufweist.

6. Drucker gemäß Anspruch 2, bei dem das Druckelement (14) eine Lichtquelle (52) zur Erzeugung eines elektrostatischen latenten Bildes auf dem fotoleitenden Körper (14a) enthält, wobei die Lichtquelle (52) in eine Stellung zum Beleuchten eines Bogens zum Lesen von Daten davon an der Lesestation (52) drehbar ist.

7. Drucker gemäß Anspruch 6, wobei die Lichtquelle (52) eine integral gebildete Anordnung von Leuchtelementen (53) und Lichtnachweiselementen (55) aufweist.

## Revendications

1. Imprimante à fonctions multiples comprenant un trajet (22) de déplacement de feuille agencé pour former une boucle, un élément imprimant (14) situé à l'intérieur de la boucle pour imprimer des données sur une feuille dans ledit trajet (22) ; et un poste de lecture (8, 52) destiné à lire des données sur une feuille ;
caractérisée en ce que :
le poste de lecture (8, 52) est disposé le long dudit trajet (22) et agencé pour effectuer la lecture double face de ladite feuille, et en ce que ledit trajet est agencé de façon qu'une feuille puisse parcourir complètement la boucle sans être inversée.

2. Imprimante selon la revendication 1, dans laquelle l'élément imprimant (14) comprend le corps (14a) conducteur de l'électricité d'un moyen d'impression par électrophotographie.

3. Imprimante selon la revendication 1 ou 2, incluant un premier accès (24) d'introduction pour introduire une feuille à imprimer dans ledit trajet (22), un second accès (25) d'introduction pour introduire une feuille à lire dans ledit trajet (22), un premier accès (26) d'évacuation pour évacuer une feuille imprimée dudit trajet (22) et un second accès (27) d'évacuation pour évacuer une feuille lue dudit trajet (22).

4. Imprimante selon la revendication 1, 2, ou 3, dans laquelle ledit trajet (22) comprend une partie d'inversion (34) pourvue d'un moyen (23b, 29, 30, 31, 33) d'inversion destiné à inverser le déplacement d'une feuille dans ledit trajet (22).

5. Imprimante selon la revendication 4, dans lequel le moyen (23b, 29, 30, 31, 33) d'inversion comprend des rouleaux (23b, 33), une lame basculante (31) et des capteurs (29, 30) de détection de feuille.

6. Imprimante selon la revendication 2, dans laquelle l'élément imprimant (14) comprend une source de lumière (52) destinée à créer une image latente électrostatique sur ledit corps photoconducteur (14a), la source de lumière (52) étant mobile en rotation jusqu'à une position propre à éclairer une feuille pour y lire des données au poste de lecture (52).

7. Imprimante selon la revendication 6, dans laquelle ladite source de lumière (52) comprend un groupement d'éléments d'émission de lumière (53) et de détection de lumière (55) formé d'un seul tenant.
